# FASCICULE DE BREVET EUROPEEN

(11) **EP 3 416 903 B1**
(45) Date de publication et mention de la délivrance du brevet: **06.11.2024**
(21) Numéro de dépôt: 17710594.7
(22) Date de dépôt: 17.02.2017
(51) Int. Cl.: B65G 47/71, B65G 47/84

(54) **CONVOYAGE A PLUSIEURS SORTIES**
FÖRDERSYSTEM MIT MEHREREN AUSLÄSSEN
CONVEYING SYSTEM WITH A PLURALITY OF OUTLETS

(30) Priorité: 19.02.2016 FR 1651383
(43) Date de publication de la demande: 26.12.2018
(60) Demande divisionnaire: 24204482.4
(73) Titulaire: SIDEL PARTICIPATIONS, S.A.S., 76930 Octeville-sur-Mer (FR)
(72) Inventeur: GEHIN, Anthony, 67116 Reichstett (FR); HUTTER, Patrick, 67116 Reichstett (FR)
(74) Mandataire: Sidel Group
(86) Numéro de dépôt international: PCT/FR2017/050361
(87) Numéro de publication internationale: WO 2017/140992

(56) Documents cités:
- EP-A1- 2 163 498
- EP-A1- 2 204 342
- WO-A1-2014/076390
- US-A1- 2014 119 875

## Description

La présente invention relève du traitement industriel de produits à la chaîne dans une ligne du type ligne de conditionnement, et a pour objet, d'une part, un dispositif de convoyage et, d'autre part, un procédé mettant en oeuvre ce dispositif.

Dans ce domaine, il existe un besoin pour créer, à partir d'un seul flux, plusieurs flux différents qui, chacun, alimente une machine.

Ainsi, CA2146444 divulgue une solution dans laquelle un flux de produits en vrac est séparé en couloirs pour un seul produit de front, puis, par changement de direction, ces couloirs créent des flux de plusieurs produits de large chacun. Il existe cependant de nombreux problèmes tant à la séparation d'un flux quinconcé jusqu' à plusieurs couloirs qu'à l'obtention de matrices non quinconcées en aval.

DE1786484 divulgue une solution de division d'un flux unifilaire en plusieurs couloirs, à partir d'une roue de transfert qui lâche les produits dans les couloirs. Un tel principe ne permet cependant pas d'accumulation et ne crée en sortie que des flux larges d'un seul produit.

EP 2402269 propose encore par exemple une solution de déviation vers différents couloirs d'un flux amont multifilaire. Ce principe repose sur des poussoirs contrôlés qui dévient le produit en fonction de sa position. Il est cependant difficile d'adapter un tel principe à des flux de sortie larges de plusieurs produits, ainsi qu'à un grand nombre de flux en parallèle. En outre, la cadence est limitée et les possibilités d'accumulation nulles.

De telles solutions à base de déviateur présentent aussi un inconvénient significatif lorsque les machines en aval sont positionnées l'une à côté de l'autre. En effet, il est alors nécessaire de prévoir des convoyeurs courbes qui relient un seul point à des machines en aval qui sont espacées les unes des autres.

Le document US2014119875 décrit un dispositif de formation de lots, au moyen d'un agencement de différents convoyeurs.

Le document EP2204342, quant à lui, se focalise sur le groupage de produits en vue de leur encaissage, avec un seul flux de sortie.

Le document EP2163498 concerne un dispositif pour déplacer et positionner des produits dans une ligne, dépourvu de surface d'accumulation.

On connaît enfin aussi WO2014/076390 qui divulgue une solution dans laquelle un flux de produits entrant est transféré transversalement sur une surface d'accumulation. Les produits, reposant en colonnes longitudinales l'une à côté de l'autre, sont ensuite transférés transversalement vers un convoyeur de sortie. On évite ainsi la nécessité de passer par un flux de vrac entre une circulation unifilaire et une circulation en plusieurs couloirs.

Pour ce faire, l'invention propose d'aménager une surface d'accumulation, longée par l'alimentation de produits d'un côté, et, de l'autre, par une succession transversale de zones de réception où les produits peuvent être déposés à chaque fois sur un moyen de déplacement autonome, du type convoyeur à bande, chariot ou autre, chaque zone de réception servant à alimenter un poste en aval.

L'invention a ainsi pour objet un dispositif selon la revendication 1.

L'invention a aussi pour objet une méthode mise en oeuvre par ce dispositif, à savoir un procédé de convoyage selon la revendication 10.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre un mode de réalisation de l'invention où les convoyeurs de sortie sont directement l'un contre l'autre ;
- la figure 2 montre une réalisation où deux convoyeurs de sortie sont séparés par une surface de transfert ;
- la figure 3 montre une réalisation avec des convoyeurs de sortie qui peuvent circuler dans les deux sens ;
- la figure 4 illustre des cycles possibles pour les outils du moyen de déchargement ;
- la figure 5 montre une configuration avec plusieurs postes en amont et plusieurs postes en aval ;
- la figure 6 schématise enfin une section avec un outil pour le chargement et un outil pour le déchargement.

L'invention a donc tout d'abord comme objet un dispositif de convoyage 1 comprenant un moyen de convoyage amont 2 pour recevoir des produits 3 depuis au moins un poste amont, une surface d'accumulation 4 le long de laquelle circule le moyen de convoyage amont 2, un moyen de chargement 5 pour déplacer les produits 3 depuis le moyen de convoyage amont 2 jusque sur la surface d'accumulation, un moyen de convoyage aval 6 pour dégager les produits 3, ainsi qu'un moyen de déchargement 7 pour déplacer les produits 3 depuis la surface d'accumulation 4 jusque sur le moyen de convoyage aval 6. La surface d'accumulation 4 se trouve entre, d'une part, le moyen de convoyage amont 2 et, d'autre part, le moyen de convoyage aval 6.

Les produits 3 sont préférablement les uns derrière les autres en une colonne unifilaire, et donc sans quinconcage, en colonne d'un ou plusieurs produits 3 de large, avec un écart entre eux, éventuellement non contrôlable, ou en contact.

Le moyen de convoyage amont 2 s'étend contre la surface d'accumulation 4 et prend la forme d'au moins un convoyeur à bande sans fin, sur la surface duquel les produits 3 sont posés. Le moyen de convoyage amont 2 peut s'étendre au-delà de la surface d'accumulation 4 pour éventuellement en alimenter une autre. Le dispositif de convoyage 1 peut en effet être muni de plusieurs surfaces d'accumulation 4 différentes, réparties le long du moyen de convoyage amont 2, d'un côté ou de l'autre.

La surface d'accumulation 4 peut être une plaque morte ou un convoyeur qui déplace les produits 3 perpendiculairement au moyen de convoyage amont 2.

Par « surface d'accumulation » au sens de l'invention on entend une surface disposée entre deux équipements amont et aval (en l'occurrence pour la surface d'accumulation 4, il s'agit du moyen de convoyage amont 2 et du moyen de convoyage aval 6) permettant de gérer le flux d'articles transportés entre ces deux équipements en accumulant des articles de façon notamment à ce que le fonctionnement de l'un des équipements puisse être modifié (changement de cadence, arrêt...), sans impacter le fonctionnement de l'autre.

Ainsi, la surface d'accumulation 4 doit être suffisamment grande pour pouvoir stocker une grande quantité de produits 3 de manière à pouvoir mieux gérer le flux de produits 3.

En particulier, sa dimension qui est le long de la circulation des produits 3 peut contenir plusieurs produits 3 et de préférence plus de 10 produits 3, en particulier, plus de 20 produits 3, préférentiellement plus de 30 produits 3.

Le moyen de chargement 5 travaille par balayage sur des produits 3 alors immobiles sur le moyen de convoyage amont 2, et pousse donc les produits 3 transversalement sur la surface d'accumulation 4 contre laquelle circule le moyen de convoyage amont 2. Les produits 3 sont donc arrêtés lorsque le moyen de chargement 5 agit, et une solution tampon peut être prévue pour garantir un flux de produits 3 continu en amont du dispositif de convoyage 1, alors que les produits 3 doivent régulièrement être arrêtés.

Le moyen de convoyage amont 2 entraîne ainsi les produits 3 dans une direction de convoyage 11 et il en va de même pour le moyen de convoyage aval 6, qui est de l'autre côté de la surface d'accumulation 4 par rapport au moyen de convoyage amont 2. Ils forment donc des solutions de convoyages parallèles, d'un côté ou de l'autre de la surface d'accumulation 4. Le chargement de produits 3 sur la au moins une surface d'accumulation 4 se fait pour un tronçon du flux dans la direction de convoyage 11 et donc un lot de produits 3, et le déchargement de la au moins une surface d'accumulation 4, au côté opposé, sur le moyen de convoyage aval 6, se fait aussi pour un tronçon de produits 3 dans cette direction, préférablement pour un tronçon de même longueur, voire aussi de même largeur. Les moyens de chargement 5 et de déchargement 7 sont donc adaptés pour déplacer plusieurs produits 3 simultanément et de préférence pour déplacer simulatéménent au moins une colonne de produits 3 parallèle à la direction de convoyage 11 dont la longueur peut notamment correspondre à la longueur de la dimension de la surface d'accumulation qui longe la circulation des produits 3 sur le convoyeur amont 2.

Préférentiellement, les moyens de chargement 5 et de déchargement 7 s'étendent parallèlement à la direction de convoyage 11 sur toute la longueur de la surface d'accumulation 4.

Préférablement, le moyen de chargement 5 est apte à déposer des produits 3 sur la surface d'accumulation 4 à différents endroits de cette dernière pour décorréler le cycle de chargement du cycle de déchargement. En d'autres termes, les produits déplacés par le moyen de chargement peuvent être déposés à n'importe quel niveau le long de l'axe perpendiculaire à la direction de convoyage 11. En particulier, une rangée de produits 3 peut être disposée sur la surface d'accumulation 4 à la parallèlement à la direction de convoyage 11 et contre une rangée de produits 3 déjà placée sur cette surface afin d'optimiser l'espace disponible. Il est entendu que les produits 3 nouvellement disposés sur la surface d'accumulation 4 sont plus proches du moyen de convoyage amont 2 que les produits 3 qui étaient déjà présents sur la surface d'accumulation 4.

Un avantage de cette configuration est qu'il est possible de décharger sur le moyen de convoyage aval 6 des produits 3 qui sont organisés en plusieurs colonnes selon la direction de convoyage 11, chacune unifilaire d'un seul produit 3 de large, l'une à côté de l'autre, et donc sans aucun quinconcage ou emboîtement des produits 3. On évite alors les problèmes et difficultés associées à la suppression de ce quinconcage pour alimenter un appareil aval dans lequel les produits 3 circulent en couloirs, comme une fardeleuse, par exemple.

Le moyen de déchargement 7 peut glisser sur le moyen de convoyage aval 6 plusieurs rangées longitudinales de produits 3 simultanément, en particulier deux segments côte à côte d'un produit 3 de large chacun.

Le moyen de chargement 5 ainsi que le moyen de déchargement 7 peuvent présenter une coiffe, déplacée par un actionneur multiaxe et qui vient sur les produits 3, soit au niveau du moyen de convoyage amont 2 pour les glisser sur la au moins une surface d'accumulation 4 transversalement à la direction de convoyage 11, soit au niveau de la au moins une surface d'accumulation 4 pour les glisser sur le moyen de convoyage aval 6, là aussi transversalement à la direction de convoyage 11. Une telle coiffe vient sur les produits 3 à traiter par le haut. Il peut aussi s'agir d'un simple poussoir, auquel cas, un tel poussoir peut simplement aborder les produits 3 par leur côté, parallèlement au plan commun de la surface d'accumulation 4, du moyen de convoyage amont 2 et du moyen de convoyage aval 6. Un montage à fleur évite de déséquilibrer les produits 3 lorsqu'ils circulent vers ou depuis la surface d'accumulation 4.

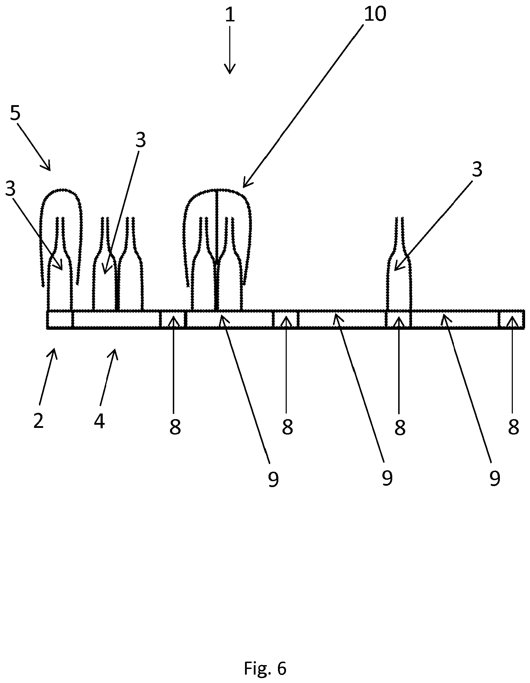

Une coiffe peut être simple comme par exemple celle du moyen de chargement 5 représenté en figure 6. Une telle coiffe permet de déplacer une colonne de produits 3 à la fois et comprend deux rebords extérieurs sensiblement verticaux s'étendant le long de la direction de convoyage de part et d'autre de la colonne de produits 3.

Une coiffe peut également être multiple, et notamment double, comme par exemple celle du moyen de déchargement 7 représenté en figure 6. Une telle coiffe permet de déplacer plusieurs colonnes de produits 3 à la fois. Outre les deux rebords extérieurs, elle comprend une ou plusieurs plaque(s) verticale(s) entre les rebords extérieurs parallèlement à ces derniers, et destinée(s) à séparer les différentes colonnes à déplacer. Une coiffe double comprend ainsi une plaque verticale entre les deux rebords extérieurs afin de déplacer simultanément deux colonnes de produits 3.

Ainsi, une coiffe multiple permet avantageusement de glisser simultanément plusieurs colonnes de produits 3 tout en évitant la quinconce entre les produits.

L'action sur les produits 3 du moyen de chargement 5 et du moyen de déchargement 7 est essentiellement une poussée plane, préférablement linéaire, parallèle au plan de la surface d'accumulation 4. Tant le moyen de chargement 5 que le moyen de déchargement 7 peut comprendre un robot articulé et/ou un jeu de glissières pour se déplacer le long de l'action à effectuer sur les produits 3.

Le moyen de convoyage amont 2 ainsi que le moyen de convoyage aval 6 peuvent chacun présenter une pluralité de bandes de convoyage différentes, chacune étant mise en mouvement par un moteur dédié, ce sorte que la vitesse de circulation de ces bandes, et donc desdits moyens, est variable et contrôlable.

Selon l'invention, le moyen de convoyage aval 6 comprend une pluralité de moyens de déplacement indépendants recevant les produits 3 dans des zones de réception successivement réparties depuis le bord de la surface d'accumulation 4 opposé à celui le long duquel s'étend le moyen de convoyage amont 2, notamment des moyens de déaplcement indépendants sous forme de chariots mobiles indépendants, ou encore de convoyeurs de sortie 8, du type convoyeur à bande, chacun étant alors préférablement motorisé et contrôlable dans son mouvement d'une façon indépendante des autres. Le moyen de convoyage aval 6 présente une pluralité de moyens de déplacement indépendants qui se succèdent perpendiculairement à la direction de convoyage 11, de façon permanente ou au moins lors de la décharge des produits 3 sur lui.

Ainsi, selon une caractéristique additionnelle possible, au moins un moyen de déplacement indépendant prend la forme d'un chariot mobile autonome, qui, pour recevoir les produits 3 du moyen de déchargement 7, vient se placer temporairement dans l'une des zones de réception, et se déplace pour les dégager. Selon une autre caractéristique additionnelle possible, combinée ou alternative, au moins un moyen de déplacement indépendant prend la forme d'un convoyeur de sortie 8 linéaire indépendant, s'étendant depuis l'une des zones de réception.

Le moyen de convoyage aval 6 forme la sortie du dispositif de convoyage 1 et lui permet d'amener les produits 3 au poste en aval, à qui il doit les fournir. Le au moins un convoyeur de sortie 8 que comprend le moyen de convoyage aval 6 est donc relié préférablement à l'entrée d'un poste de traitement assurant la suite du processus, directement ou à travers au moins un autre convoyeur.

Les convoyeurs de sortie 8 sont les uns à côté des autres, comme le montrent les figures, et il en va donc de même pour les zones de réception d'où ils s'étendent ou à partir desqueles des chariots peuvent réceptionner les produits 3. Les zones de réception et les convoyeurs de sortie 8 se succèdent donc transversalement à la direction de convoyage 11, à partir du bord de la au moins une surface d'accumulation 4 opposé à celui où circule le moyen de convoyage amont 2. Ainsi, le moyen de convoyage amont 2, fait d'un seul ou plusieurs convoyeurs, se trouve d'un côté de la surface d'accumulation 4, alors que le moyen de convoyage aval 6, formé de plusieurs moyens de déplacement indépendants, se trouve de l'autre côté de cette surface.

Chaque convoyeur de sortie 8 peut donc être mis en mouvement de façon indépendante, et il en va de même pour des chariots. Cela permet ainsi de décharger le contenu de la au moins une surface d'accumulation 4 sur l'un ou l'autre des moyens de déplacements.

Le dispositif de convoyage 1 a ainsi une entrée de produits 3, sous la forme du moyen de convoyage amont 2, et plusieurs sorties parallèles de produit 3 sous la forme d'un moyen de convoyage aval 6 comprenant plusieurs convoyeurs de sortie 8 indépendants, ou de façon générale des moyens de déplacements recevant les produits 3 depuis des zones de réception réparties transversalement depuis le bord de la surface d'accumulation 4. Le moyen de déchargement 7 dépose donc les produits 3 sur l'un ou l'autre des convoyeurs de sortie 8 ou l'un ou l'autre des chariots, à chaque fois en un lot d'une seule colonne ou de plusieurs colonnes l'une à côté de l'autre.

Un convoyeur de sortie 8 peut donc être mis en mouvement alors qu'un autre est à l'arrêt, etc. Cela permet au moyen de déchargement 7 de déposer des produits 3 sur un convoyeur de sortie 8 à l'arrêt ou à vitesse très faible, alors qu'un autre convoyeur de sortie 8, sur lequel il a déposé des produits 3 au préalable, circule à une vitesse différente pour dégager les produits 3 qui reposent sur lui vers un poste de traitement en aval.

On notera qu'à chaque cycle, le moyen de déchargement 7 traite les produits 3 les plus proches du bord de la surface d'accumulation 4 où se trouve le moyen de convoyage aval 6. Il les dépose sur un voire plusieurs moyens de déplacement du moyen de convoyage aval 6. Comme ces convoyeurs 8 sont l'un à la suite de l'autre, amener les produits 3 sur l'un d'eux peut nécessiter de les faire circuler sur au moins un autre moyen de déplacement avant.

Le dispositif de convoyage 1 présente préférablement une unité de contrôle pour superviser et coordonner le fonctionnement du moyen de convoyage amont 2, et/ou du moyen de chargement 5 et/ou du moyen de déchargement 7 et/ou du moyen de convoyage aval 6 c'est-à-dire des différents moyens de déplacement qu'il comprend. Comme il sera encore précisé plus loin, il est envisageable qu'au moins l'un des convoyeurs de sortie 8 puisse circuler dans les deux sens le long de sa direction, ce qui par exemple peut se faire en prévoyant deux moteurs pour un tel convoyeur.

Selon une caractéristique additionnelle possible, le moyen de déchargement 7 est apte à déposer des produits 3 dans au moins deux zones de réception différentes. Le moyen de déchargement 7 travaille donc de façon cyclique, et extrait des produits 3 de la au moins une surface d'accumulation 4 pour les déposer sur un moyen de déplacement, puis retourne chercher des produits 3 sur ladite surface pour les déposer sur un moyen de déplacement, éventuellement un autre, etc. Bien entendu, le nombre de produits 3 traités peut changer à chaque fois.

Comme les zones de réception se succèdent transversalement à la direction de convoyage 11, les produits 3 peuvent être amenés à passer sur un autre moyen de déplacement avant d'atteindre celui sur lequel ils seront libérés.

De façon préférée, le moyen de déchargement 7 est formé par un jeu de glissières horizontales, ainsi parallèles au plan horizontal dans lequel se trouvent la surface d'accumulation 4, le moyen de convoyage amont 2 et le moyen de convoyage aval 6, sur lequel est monté un portique mobile le long de ces glissières transversales à la direction de convoyage 11, un outil coopérant avec ces produits 3 y étant monté mobile au moins verticalement, voire aussi dans la direction de convoyage 11, pour agir sur les produits 3, en venant les pousser depuis le côté, après les avoir éventuellement coiffés par le dessus pour une meilleure prise. L'outil de déchargement 7 ne soulève cependant préférablement pas les produits 3, ce qui permet de conserver un outillage léger et dynamique. Ces glissières s'étendent sur préférablement tout le moyen de convoyage aval 6 et donc l'ensemble des zones de réception successives.

Une telle construction est aussi envisageable pour le moyen de chargement 5, les glissières s'étendant bien sûr alors au niveau du moyen de convoyage amont 2.

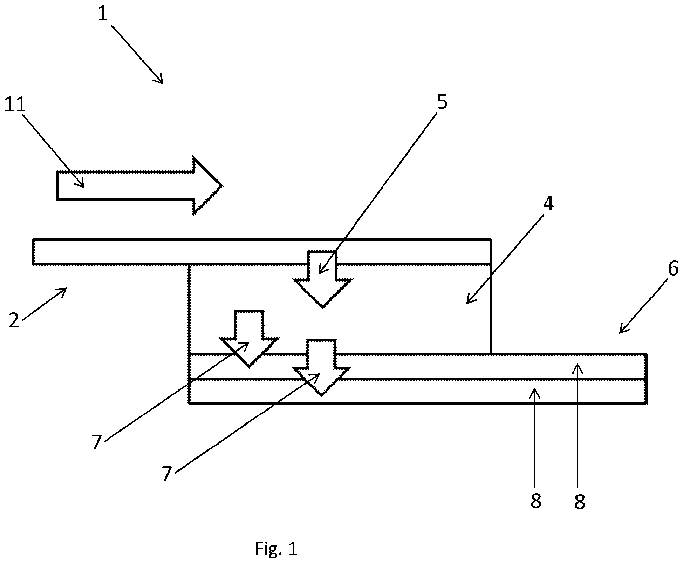

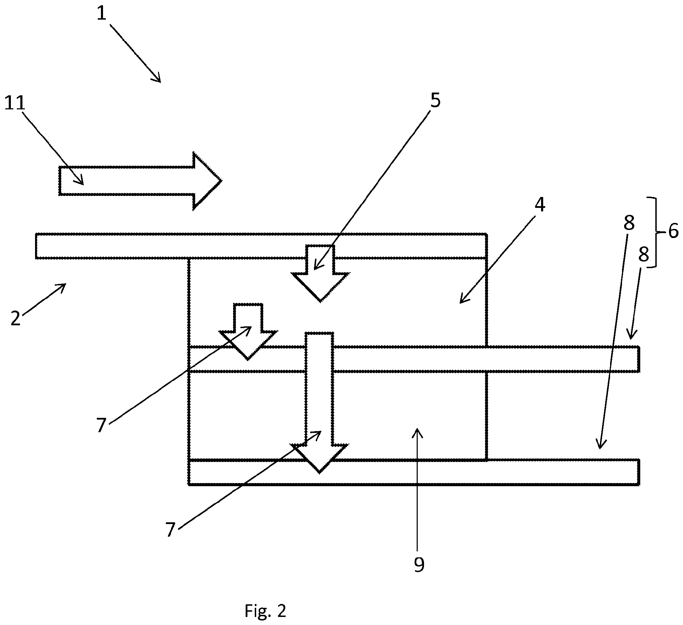

Le dispositif de convoyage 1 comprend, pour au moins une paire de zones de réception successives, une surface de transfert 9 montée entre elles, notamment une surface de transfert 9 montée entre deux convoyeurs de sortie 8. La figure 1 montre le cas de zones de réception ou de convoyeurs de sortie 8 directement l'un à la suite de l'autre perpendiculairement à la direction de convoyage 11, alors que la figure 2 montre une réalisation avec une surface de transfert intercalée.

La surface de transfert 9 est située au même niveau que les deux convoyeurs de sortie 8 entre lesquels elle se trouve, ces deux convoyeurs étant à la même hauteur, ou alors au même niveau que les chariots qui arrivent en et repartent de la zone réception. Le dispositif de convoyage 1 présente donc une surface d'accueil avec des éléments successifs à fleur, à savoir le moyen de convoyage amont 2, la surface d'accumulation 4, les convoyeurs de sortie 8 ou la surface supérieure des chariots, et les surfaces de transfert 9.

La surface de transfert 9 se trouve donc entre deux convoyeurs de sortie 8, de sorte à former, transversalement à direction de convoyage 11, un alignement d'un convoyeur de sortie 8, d'une surface de transfert 9, puis d'un autre convoyeur de sortie 8. Il en va de même pour des chariots, le cas échéant.

La au moins une surface de transfert 9 peut être une plaque morte, qui n'entraîne donc pas les produits 3, ou encore une plaque à adhérence particulièrement réduite comme avec un matelas d'air ou des billes libres en rotation, ou encore une surface qui entraîne les produits 3 transversalement à la direction de convoyage 11, par exemple un tapis mobile.

L'avantage de disposer d'une telle surface de transfert 9 est qu'il est possible d'avoir des convoyeurs de sortie 8 linéaires et parallèles, donc simples et peu onéreux, reliés directement chacun à un poste en aval. L'implantation est donc telle que le pas entre les postes en aval est répété au niveau des convoyeurs de sortie 8, ce qui permet donc une configuration de ligne optimale, avec un dispositif de convoyage 1 qui répartit les produits 3 qu'il reçoit sur un moyen de convoyage amont 2 vers différents postes en aval, grâce à différents convoyeurs de sortie 8 parallèles et espacés de façon à répéter l'espacement desdits postes.

Dans le dispositif de convoyage 1, les produits 3 subissent donc un mouvement plan depuis le moyen de convoyage amont 2, la surface d'accumulation 4, les convoyeurs de sortie 8 ou chariots et les surfaces de transfert 9. La surface de transfert 9 à fleur permet d'éviter de devoir soulever les produits 3 à amener jusqu'à un convoyeur de sortie 8 droit et éloigné, et permet ainsi d'avoir recours à un outillage léger et dynamique.

Une telle surface de transfert 9 peut aussi servir à recevoir des produits 3 à déposer sur un moyen de déplacement encore plus loin, et de réaliser alors le moyen de déchargement 7 sous la forme de deux outils 10 qui travaillent simultanément, le premier amenant des produits 3 que traitera l'autre pendant que le premier charge les suivants, etc. Les temps de cycle peuvent ainsi être diminués, ou autrement dit la taille du dispositif de convoyage 1 transversalement à la direction de convoyage 11 peut être largement augmentée et mise en adéquation avec l'agencement et l'espacement des postes en aval.

Ainsi, le moyen de déchargement 7 est apte à larguer des produits 3 sur la au moins une surface de transfert 9. Il exerce ainsi un mouvement plan, parallèle à la au moins une surface d'accumulation 4, sur les produits 3 depuis la au moins une surface d'accumulation 4 jusque sur la surface de transfert 9. Une fois arrivé sur la surface de transfert 9, l'outil dont il est pourvu pour venir au contact des produits 3 se soulève jusqu'à suffisamment haut pour pouvoir à nouveau effectuer un mouvement de retour vers la surface d'accumulation 4, parallèlement à elle, sans toucher les produits 3 et donc en étant plus haut qu'eux. Pendant ce temps, un autre outil 10 du moyen de déchargement 7 vient saisir les produits 3 en attente sur la surface de transfert 9 et les amène sur le moyen de déplacement visé.

Les produits 3 sont donc déposés à l'arrêt par le premier outil 10 dans l'attente de leur traitement par le deuxième outil 10. Les produits 3 sont à l'arrêt sur une surface de transfert 9, mais pourraient aussi être déposés par le premier outil 10 sur un moyen de déplacement alors préférablement immobile.

Le moyen de déchargement 7 peut comprendre plus de deux outils 10 qui travaillent l'un à la suite de l'autre sur les produits 3 pour assurer leur dépose sur le moyen de déplacement prédéfini parmi la pluralité du moyen de convoyage aval 6.

L'amplitude de travail de chaque outil 10 du moyen de déchargement 7 peut être tout ou partie de l'empattement du dispositif de convoyage 1 perpendiculairement à la direction de convoyage 11.

Ainsi, dans certaines réalisations, le moyen de déchargement 7 comprend un outil 10 unique, qui peut dégager des produits 3 dans chacune des zones de réception, et, le cas échéant, sur chaque surface de transfert 9. Le moyen de déchargement 7 est donc relativement simple. Le même outil 10 peut donc être amené à circuler au-dessus d'un ou plusieurs moyen de déplacement avant d'atteindre celui où il doit déposer les produits 3.

Dans d'autres réalisations, le moyen de déchargement 7 comprend au moins deux outils 10 distincts, qui traitent successivement les produits 3, à savoir un premier outil 10 apte à chercher des produits 3 sur la au moins une surface d'accumulation 4, et au moins un deuxième outil 10 apte à déposer les produits 3 sur un moyen de déplacement, chariot ou convoyeur de sortie 8. Le moyen de déchargement 7 amène les produits 3 sur au moins l'un des moyens de déplacement grâce à l'action successive de plusieurs outils 10. Le premier outil 10 de cette succession dégage les produits 3 de la au moins une surface d'accumulation 4, et le dernier outil 10 dépose les produits 3 sur un moyen de déplacement.

Le moyen de déchargement 7 peut avoir davantage d'outils 10, comme un troisième outil 10 intermédiaire qui cherche les produits 3 en aval à la surface d'accumulation 4 et les dépose en amont du moyen de déplacement cible.

Chaque outil 10 peut donc être déplacé indépendamment du ou des autres outils 10. Les différents outils 10 peuvent être déplacés sur le même jeu de glissières ou rail.

Selon une autre caractéristique additionnelle possible, au moins une surface de transfert 9 forme une zone tampon où des produits 3 peuvent être stockés temporairement de façon intermédiaire entre la surface d'accumulation 4 et le moyen de déplacement indépendant qui doit les dégager. Ainsi, le moyen de déchargement 7 agit en deux temps pour amener les produits 3 sur le moyen de déplacement concerné. Cela signifie aussi que le moyen de déchargement 7 peut gérer simultanément plusieurs lots de produits 3 pour les amener au bon moyen de déplacement, chaque lot correspondant à un groupe de produits 3 extrait initialement en une fois de la surface d'accumulation 4.

Les produits 3 passent donc par au moins une zone tampon intermédiaire entre la surface d'accumulation 4 et le moyen de déplacement visé. Bien entendu, amener le groupe de produits 3 sur le bon moyen de déplacement se fait éventuellement avec plus de deux manoeuvres d'outil 10.

Dans certains cas envisageables, la au moins une surface de transfert 9 est une surface d'entraînement motorisée et entraîne les produits 3 transversalement en direction du moyen de déplacement indépendant. Ainsi, la surface de transfert 9 assure le déplacement des produits 3 transversalement à la direction de convoyage 11, notamment entre deux moyens de déplacement, chariots ou convoyeurs de sortie 8.

Dans certaines configurations possibles, le au moins un convoyeur de sortie 8 peut circuler, selon le cas, dans l'un ou l'autre sens, notamment grâce à une paire de moteurs d'entraînement travaillant chacun à une extrémité de la boucle fermée que forme le convoyeur de sortie 8. Il est ainsi possible d'obtenir des implantations de ligne avec des postes en aval répartis d'un côté ou de l'autre d'un axe formé par la succession des convoyeurs de sortie 8 et surfaces de transfert 9, dans le prolongement de la surface d'accumulation 4.

On comprend de cette description que le dispositif de convoyage 1 a une fonction de répartition entre une ou plusieurs voies d'entrée et plusieurs voies de sortie, chaque voie de sortie étant alimentée au niveau d'une zone de réception. Il peut aussi avoir une fonction d'accumulation entre la au moins une entrée et les sorties, grâce à une surface d'accumulation 4, voire au moins une surface de transfert 9.

L'invention a aussi pour objet un procédé mettant en oeuvre le dispositif tel que décrit ci-dessus, à savoir un procédé de convoyage de produits 3 circulant sur un moyen de convoyage amont 2 qui les entraîne en colonne unifilaire le long d'une direction de convoyage 11, puis sur un moyen de convoyage aval 6 parallèle, comprenant des étapes consistant à
- charger une surface d'accumulation 4 en y poussant transversalement les produits 3 depuis le moyen de convoyage amont 2,
- décharger la surface d'accumulation 4 en déplaçant transversalement les produits 3 sur le moyen de convoyage aval 6,
- dégager les produits 3 grâce au mouvement du moyen de convoyage aval 6, notamment les dégager en une seule colonne unifilaire ou en plusieurs colonnes unifilaires l'une à côté de l'autre.

Les produits 3 évoluent parallèlement sur les moyens de convoyage amont 2 et aval 6, disposés le long de bords opposés de la surface d'accumulation 4.

Selon l'invention, le moyen de convoyage aval 6 comprend une pluralité de moyens de déplacement indépendants, les produits 3 étant déchargés en lot sur l'un ou l'autre de ces moyens de déplacement indépendants, notamment sous forme de convoyeurs de sortie 8 ou de chariots. Les lots chargés sur la surface d'accumulation 4 par le moyen de chargement 5 peuvent correspondre aux lots déchargés ultérieurement par le moyen de déchargement 7, voire correspondre aux lots dégagés par le moyen de convoyage aval 6. Il est bien sûr envisageable que les produits 3 soient traités sous forme de groupe de taille à chaque fois différente.

Le moyen de convoyage amont 2, le moyen de convoyage aval 6, la ou les surfaces de transfert 9, se trouvent donc dans le prolongement de la surface d'accumulation 4, perpendiculairement à la direction de convoyage 11. Une fois arrêtés sur le moyen de convoyage amont 2, les produits 3 subissent, grâce à l'action successive, d'une part, du moyen de chargement 5, puis, d'autre part, du moyen de déchargement 7, voire de la surface d'accumulation 4 si elle est motrice et/ou de la ou les surfaces de transfert 9 le cas échéant, un mouvement perpendiculaire à la direction de convoyage 11 jusqu'au moyen de convoyage aval 6 puis un mouvement dans la direction de convoyage 11 grâce au moyen de convoyage aval 6.

La au moins une surface d'accumulation 4 sépare donc le moyen de convoyage amont 2 du moyen de convoyage aval 6. Le moyen de déchargement 7 extrait les produits 3 de la surface d'accumulation 4 et les dispose par groupes répartis transversalement à la direction de convoyage 11, sur un moyen de déplacement, dans une zone de réception, ou encore temporairement sur une surface de transfert 9.

Une étape peut ainsi consister à définir la localisation exacte où le moyen de déchargement 7 largue les produits 3 de façon temporaire ou définitive, à savoir un des moyens de déplacement spécifique, ou encore la ou une surface de transfert 9.

Selon une caractéristique additionnelle possible, le dégagement de produits 3 depuis la surface d'accumulation 4 jusque sur le moyen de déplacement indépendant se compose de plusieurs cycles successifs de déplacement transversal, chacun exécuté par un outil 10 différent, de sorte que, lors de chaque cycle, les produits 3 sont successivement approchés du moyen de déplacement visé. Il est ainsi possible que la dépose des produits 3 au bon endroit se fasse par des outils 10 travaillant en parallèle, ce qui réduit le temps de cycle.

Enfin, selon une autre caractéristique additionnelle possible du procédé, il comprend, entre deux cycles de déplacement, au moins une étape supplémentaire d'accumulation de produits 3 après leur prise sur la surface d'accumulation 4 et avant leur dépose sur un moyen de déplacement indépendant, en particulier une étape d'accumulation sur un moyen de déplacement à l'arrêt, chariot ou convoyeur de sortie 8, voire une étape d'accumulation sur une surface de transfert 9 localisée entre la surface d'accumulation 4 et le moyen de déplacement, les produits 3 étant alors pris à la surface d'accumulation 4 puis libérés sur la surface de transfert 9 par le moyen de déchargement 7, puis à nouveau pris sur la surface de transfert 9 et libérés sur le moyen de déplacement.

Dans le mode de réalisation illustré à la figure 1, le dispositif de convoyage 1 présente un moyen de convoyage amont 1 sous forme d'un seul convoyeur à bande, ou convoyeur d'entrée 12. Les produits 3 sont du type bouteille, canette, poche, ou autre flacon ayant donc une grande hauteur par rapport à sa base et étant ainsi instable, ou encore du type boîte ou caisse, qui peut alors être beaucoup plus stable. De façon générale, le produit 3 est un contenant ou non.

De préférence, les produits 3 sont tous identiques. En d'autres termes, ils ont le même format, sont constitués des mêmes matériaux, et s'ils contiennent quelque chose, ils contiennent tous la même chose.

Les produits 3 reposent sur le convoyeur d'entrée 12 mobile, et sont donc entraînés par lui. Le moyen de convoyage amont 2 est essentiellement linéaire et déplace les produits 3 le long d'une direction de convoyage 11. Il s'étend le long d'un bord d'une surface d'accumulation 4.

Cette surface d'accumulation 4 est préférablement essentiellement rectangulaire, avec deux bords parallèles à la direction de convoyage 11 et deux bords perpendiculaires. Le moyen de convoyage amont 2 s'étend le long d'un des bords parallèles à la direction de convoyage 11. Les produits 3 sont embarqués sur le moyen de convoyage amont 2 l'un derrière l'autre, en une colonne large d'un seul produit 3, ou en colonne large de plusieurs produits 3. Les produits 3 peuvent éventuellement aussi être en vrac et présenter des orientations différentes pour chacun d'eux.

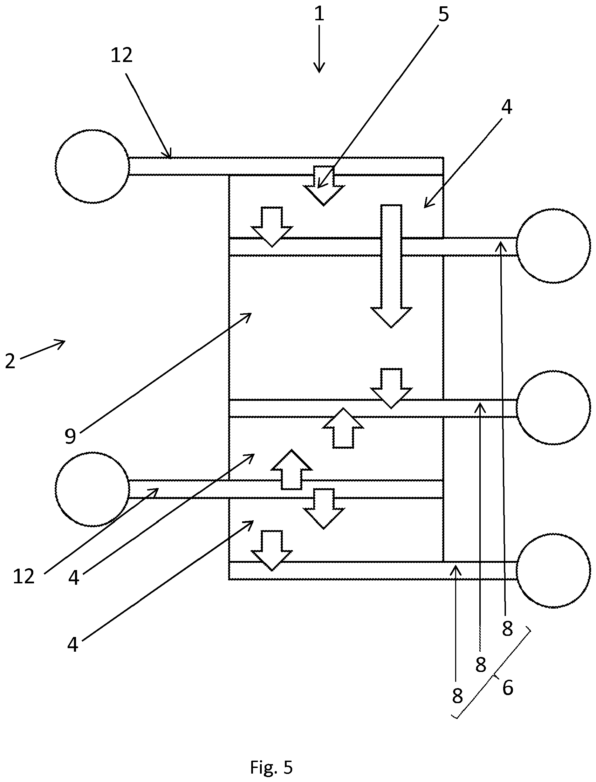

Le dispositif de convoyage 1 peut présenter une pluralité de surfaces d'accumulation 4, que longe alors à chaque fois le moyen de convoyage amont 2. La figure 5 montre par exemple un dispositif de convoyage 1 avec un moyen de convoyage amont 2 comprenant deux convoyeurs d'entrée 12, deux surfaces d'accumulation 4, et un moyen de convoyage aval 6 comprenant trois convoyeurs de sortie 8.

Le dispositif de convoyage 1 comprend aussi un moyen de chargement 5, qui sert à déplacer des produits 3 depuis le moyen de convoyage amont 2 jusque sur la au moins une surface d'accumulation 4. Les produits 3 sont ainsi arrêtés lorsqu'ils doivent être déplacés sur la surface d'accumulation 4. Ils forment alors un lot à l'arrêt qui s'étend contre un côté de la surface d'accumulation 4. Le moyen de chargement 5 pousse alors le lot de produits 3 depuis le moyen de convoyage amont 2 jusque sur la surface d'accumulation 4. Cette action est essentiellement perpendiculaire à la direction de convoyage 1. Un lot de produits 3 formé d'un tronçon de colonne d'au moins un produits 3 de large est donc balayé transversalement jusque sur la surface d'accumulation 4.

On notera que le moyen de convoyage amont 2 peut comprendre une solution d'accumulation qui permet de conjuguer, d'une part, un flux continu en amont, et, d'autre part, l'arrêt des produits 3 pour leur transfert transversal par balayage jusque sur la surface d'accumulation 4.

Les produits 3 chargés par balayage transversal depuis un côté de la surface d'accumulation 4 le long duquel circule le moyen de convoyage amont 2 sont libérés sur la surface d'accumulation 4 quelque part entre ce côté et le côté opposé, notamment en fonction des besoins de production et des produits 3 déjà présents.

L'avantage d'une telle accumulation par balayage transversal est que les produits 3 s'accumulent petit à petit sans quinconcage entre les lots successifs, sous forme d'un flux de plus grande largeur que celui sur le moyen de convoyage amont 2.

Le dispositif de convoyage 1 présente aussi un moyen de déchargement 7 qui vise à amener des produits 3, présents sur la surface d'accumulation 4, jusque sur un moyen de convoyage aval 6, grâce auquel ils sont dégagés et amenés en aval du dispositif de convoyage 1. Comme le montrent les figures attachées, le moyen de convoyage aval 6 comprend une pluralité de convoyeurs de sortie 8 distincts, qui peuvent donc être pilotés indépendamment les uns des autres. Dans certaines réalisations, le moyen de convoyage aval 6 comprend des chariots indépendants, voire une combinaison de convoyeurs de sortie 8 et de chariots. Les produits 3 sont amenés sur le moyen de convoyage aval 6 au niveau de zones de sortie où se trouvent, temporairement ou de façon permanente, les moyens de déplacement indépendants, chariots ou convoyeurs de sortie 8.

Chaque moyen de déplacement, chariot ou convoyeur de sortie 8, a une vitesse qui lui est propre, de sorte qu'il peut être en mouvement ou à l'arrêt, indépendamment de l'état des autres moyens de déplacement. Chaque convoyeur de sortie 8 est relié à un poste de traitement en aval qu'il alimente. Ainsi, le dispositif de convoyage 1 peut alimenter plusieurs postes en aval de façon indépendante à chaque fois, grâce à des moyens de déplacement 8 qui leur sont propres à chaque fois, et fonctionnant donc avec une cadence liée aux besoins dudit poste.

Bien entendu, pour faciliter la régulation et le pilotage, une succession de plusieurs convoyeurs est envisageable pour alimenter un même poste en aval. Le poste en aval est donc alimenté par un convoyeur de sortie 8 directement ou par l'intermédiaire d'au moins un autre convoyeur.

Les produits 3 sont déposés sur le convoyeur de sortie 8 sous forme d'un lot d'un produit 3 de large ou de plusieurs produits 3 de large, et long, dans la direction de convoyage 11 d'environ la longueur de la surface d'accumulation 4. La configuration du lot peut varier pour chaque moyen de déplacement, l'un étant fourni avec un lot d'un produit 3 de large, un autre avec deux produits 3 de large, etc.

Comme le montrent les figures annexées, le moyen de convoyage aval 6, et donc l'ensemble des convoyeurs de sortie 8 qui le constituent et les zones de réception à partir d'où circulent les moyens de déplacement, s'étend contre le bord de la surface d'accumulation 4 opposé à celui où se trouve le moyen de convoyage amont 2. Les lots de produits 3 chargés sur la surface d'accumulation 4 ont ainsi la même dimension dans la direction de convoyage 11 que les lots de produits 3 déchargés sur le moyen de convoyage aval 6.

Le moyen de convoyage amont 2, la surface d'accumulation 4 et le moyen de convoyage aval 6, notamment ses zones de réception, se succèdent donc transversalement à la direction de convoyage 11.

Le moyen de déchargement 7 opère en venant par-dessus les produits 3 qui sont sur la surface d'accumulation 4, le long du bord opposé à celui où se trouve le moyen de convoyage amont 2. Comme le moyen de chargement 5, il les pousse ensuite par un mouvement parallèle à la surface d'accumulation 4 jusque sur le moyen de convoyage aval 6.

Le moyen de déchargement 7 pousse un lot d'au moins un produit 3 de large depuis la surface d'accumulation 4 jusque sur l'un des moyens de déplacement particulier, en fonction des besoins du parc de machines disposés en aval. Le moyen de déchargement 7 extrait donc à chaque fois un lot de produits 3 et le dépose sur l'un des moyens de déplacement, sous forme de chariot ou de convoyeur de sortie 8. A chaque cycle, le moyen de déchargement 7 cherche un lot et le dépose sur un moyen de déplacement qui peut être différent à chaque fois. Bien entendu, le lot de produits 3 extrait de la surface d'accumulation 4 lors d'un cycle peut être déposé par portions successives sur plusieurs moyens de déplacement différents.

Par exemple, le moyen de chargement 5 peut alimenter la surface d'accumulation 4 avec des lots d'un, voire deux, produits 3 de large, alors que le moyen de déchargement 7 extrait à chaque cycle un lot de produits 3 de quatre, six ou plus produits 3 de large, ce qui permet alors d'alimenter directement plusieurs machines de fardelage par exemple.

Autrement dit, le moyen de déchargement répartit sur différents convoyeurs de sortie 8 parallèles les produits 3 qu'il extrait de la surface d'accumulation 4, et donc les répartit dans plusieurs zones de réception successives.

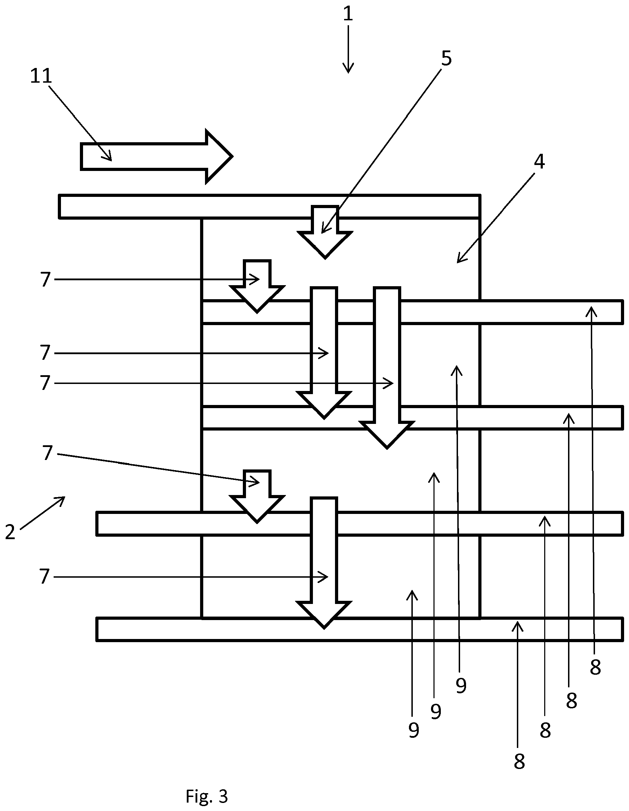

La figure 3 montre que les convoyeurs de sortie 8 ou moyens de déplacement, ou zones de réception, peuvent être séparés par des surfaces de transfert 9. On obtient alors, dans la direction perpendiculaire à la direction de convoyage 11, la succession d'un moyen de convoyage amont 2, d'une surface d'accumulation 4, puis de moyens de déplacement et de surfaces de transfert 9, ces éléments étant à fleur.

L'avantage d'une telle surface de transfert 9 est la possibilité de prévoir des convoyeurs de sortie 8 qui sont parallèles entre eux, disposés écartés avec le même pas que celui des postes en aval du dispositif de convoyage 1. En aval du dispositif de convoyage 1, un ilot de postes de traitement peut en effet être installé. Ces postes sont alors les uns à côté des autres, en particulier perpendiculairement à la direction de convoyage 11. Ils sont disposés avec un certain pas, défini par leur structure, et pour des raisons de simplicité de convoyage, il est alors avantageux de prévoir pour les alimenter, des convoyeurs linéaires, sans courbe.

Cela aboutit à une série de convoyeurs de sortie 8 du dispositif de convoyage 1 qui sont linéaires, parallèles les uns aux autres, disposés successivement perpendiculairement à la direction de convoyage 1 avec un pas qui reproduit le pas des postes de l'îlot alimenté. Pour éviter des courbures pour les convoyeurs de sortie 8, le dispositif de convoyage 1 présente alors des surfaces de transfert 9 entre les convoyeurs de sortie 8, pour qu'ils soient linéaires et répètent le pas de l'îlot.

L'ensemble des convoyeurs de sortie 8 et de la au moins une surface de transfert 9 est à fleur et forme alors un plan sur lequel le moyen de déchargement 7 fait glisser les produits 3 qu'il extrait de la surface d'accumulation 4.

Comme le moyen de déchargement 7 ne soulève pas les produits 3 de ce plan, un lot déposé sur un convoyeur de sortie 8 doit cependant ne pas empêcher l'accès à un convoyeur de sortie 8 plus loin dans ce mouvement de balayage. Une solution est par exemple de s'assurer que le lot déposé est dégagé suffisamment tôt pour ne pas gêner le passage du lot suivant. Le moyen de déplacement sur lequel le moyen de déchargement 7 a amené les produits 3 se met alors en mouvement alors que le moyen de déchargement 7 va chercher un autre lot de produits 3 à déposer sur un moyen de déplacement situé dans une zone de réception encore au-delà.

La surface de transfert 9 peut servir de zone d'accumulation. Par exemple, des produits 3 peuvent y être déposés avant d'être repris ultérieurement pour être amenés sur le convoyeur de sortie 8 visé. Cela peut être nécessaire si, compte tenu des exigences de process, le moyen de déchargement 7 n'a pas le temps d'amener le lot de produits 3 jusqu'à un convoyeur de sortie 8 trop éloigné. Cela peut aussi être nécessaire pour créer sur la surface de transfert 9 un lot de plus grande taille que celui extrait de la surface de d'accumulation 4, par exemple.

Le moyen de déchargement 7 agit donc en aval de la au moins une surface d'accumulation 4 pour en extraire des produits 3 par lot et les déposer au final sur l'un ou l'autre moyens de déplacement du moyen de convoyage aval 6, au niveau des zones de réception.

Le moyen de déchargement 7 a au moins un outil 10 qui peut se déplacer perpendiculairement à la direction de convoyage 11, le long des convoyeurs de sortie 8 et des éventuelles surfaces de transfert 9. Cet outil vient coiffer les produits 3 à extraire de la surface d'accumulation 4 par un mouvement perpendiculaire à ladite surface, puis les décale par un mouvement parallèle à ladite surface, perpendiculaire à la direction de convoyage 11. L'outil 10 se dégage ensuite vers le haut des produits 3 qu'il dépose et retourne pour un nouveau cycle.

Le moyen de déchargement 7 peut ainsi avoir un unique outil 10, dont l'amplitude de mouvement lui permet d'atteindre toutes les zones de réception et l'éventuelle au moins une surface de transfert 9.

Dans certaines réalisations, le moyen de déchargement 7 a une pluralité d'outils 10 différents, en particulier des outils 10 qui travaillent l'un à la suite de l'autre. Ainsi, les produits 3 sont extraits de la surface d'accumulation 4 à l'occasion du cycle de travail d'un premier outil 10. Ils sont déposés sur une surface de transfert 9 voire un moyen de déplacement, et sont ensuite pris par un autre outil 10 du moyen de déchargement 7. Au final, un outil 10 les dépose sur le convoyeur de sortie 8 souhaité. Il est ainsi possible d'avoir plusieurs outils 10 qui travaillent en temps masqués l'un par rapport à l'autre, ce qui est avantageux lorsque les trajets à parcourir pour les produits 3 sont éventuellement long transversalement à la direction de convoyage 11.

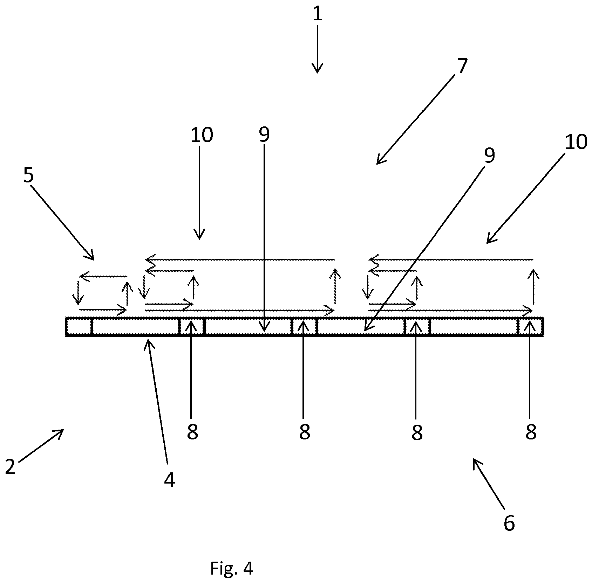

La figure 4 montre ainsi des cycles de fonctionnement possibles pour deux outils 10 : un cycle de chargement pour le moyen de chargement 5, entre le moyen de convoyage amont 2 et la surface d'accumulation 4, un cycle de déchargement entre la surface d'accumulation 4 et une surface de transfert 9, puis un deuxième cycle de déchargement depuis cette surface de transfert 9 jusque dans la zone de réception finale.

Dans cette figure, le moyen de chargement 5 a un cycle de fonctionnement au niveau du moyen de convoyage amont 2 et de la surface d'accumulation 4 à proximité. Le moyen de déchargement 7 a deux outils 10. Le premier outil 10 peut chercher les produits 3 sur la surface d'accumulation 4 et les déposer, après un cycle court, directement sur le moyen de déplacement 8 contre la surface d'accumulation 4. Il peut aussi avoir un cycle légèrement plus long, non représenté, et déposer les produits 3 sur une surface de transfert 9 juste après ce moyen de déplacement. Avec un cycle encore légèrement plus grand, ce même outil 10 dépose les produits 3 sur la surface de transfert 9 suivante.

L'autre outil 10 peut alors récupérer les produits 3 sur cette plaque de transfert 9, sur laquelle ils s'accumulent éventuellement, et les amener sur le convoyeur de sortie 8 juste après, ou les amener sur le dernier convoyeur de sortie 8, encore après la troisième surface de transfert 9.

Dans le cas où le moyen de déchargement 7 travaille avec plusieurs outils 10 successifs, les produits 3 peuvent être déposés en attente entre deux outils 10 sur une surface de transfert 9 ou dans une zone de réception, en attente, alors à l'arrêt sur un moyen de déplacement.

Dans la configuration de la figure 5, le dispositif de convoyage 1 assure la liaison entre deux postes en amont et trois postes en aval. Le moyen de convoyage amont 2 a deux convoyeurs d'entrée 12 différent, chacun amenant les produits 3 d'une seule machine. Le dispositif de convoyage 1 comprend une pluralité de surfaces d'accumulation 4 : l'une d'elle est contre un des convoyeurs d'entrée 12, deux autres sont contre l'autre convoyeur d'entrée 12, chacune d'un côté.

Le moyen de convoyage aval 6 comprend trois convoyeurs de sortie 8 et une surface de transfert 9 : à partir du premier convoyeur d'entrée 12, un convoyeur de sortie 8 directement après l'une des surfaces d'accumulation 4, puis une surface de transfert 9, un autre convoyeur de sortie 8 ; à partir du deuxième convoyeur d'entrée 12, un convoyeur de sortie 8 situé contre chaque surface d'accumulation 4 qu'il longe.

On notera qu'il est ainsi possible qu'une même zone de réception soit alimentée par différents convoyeurs d'entrée 12, et donc par des machines amont différentes, chaque machine débitant éventuellement des produits 3 différents.

Grâce à l'invention, il est ainsi possible d'alimenter, à partir d'un seul flux de produits, différentes machines situées en aval de façon contrôlée. La quinconce entre les produits est évitée, et chaque machine peut avoir sa propre taille de flux d'entrée. Une application particulièrement intéressante peut être entre une machine amont qui délivre des produits 3 finis à l'unité, comme une souffleuse étiqueteuse de bouteille plastique de liquide, et des postes de fardelage nécessitant des produits 3 organisés en couloirs d'un produit 3 séparés.

Le moyen de déchargement 7 peut comprendre un jeu de glissières perpendiculaires à la direction de convoyage 11 et parallèles à la surface d'accumulation 4. Ces glissières peuvent s'étendre au-dessus de toute la succession des zones de réception où viennent ou se trouvent les moyens de déplacement, avec éventuellement au moins une surface de transfert 9. Un même jeu de glissière peut servir à plusieurs outils 10 ayant des zones d'action réparties successivement perpendiculairement à la direction de convoyage 11.

## Revendications

1. Dispositif de convoyage (1) comprenant un moyen de convoyage amont (2) pour recevoir des produits (3) depuis au moins un poste amont, une surface d'accumulation (4) le long de laquelle circule le moyen de convoyage amont (2), dispositif de convoyage (1) dans lequel ledit moyen de convoyage amont (2) s'étend contre ladite surface d'accumulation (4) et prend la forme d'au moins un convoyeur à bande sans fin, sur la surface duquel les produits (3) sont posés, un moyen de chargement (5) pour déplacer les produits (3) depuis ledit moyen de convoyage amont (2) jusque sur la surface d'accumulation, un moyen de convoyage aval (6) pour dégager les produits (3), ainsi qu'un moyen de déchargement (7) pour déplacer les produits (3) depuis la surface d'accumulation (4) jusque sur le moyen de convoyage aval (6), la surface d'accumulation (4) se trouvant entre, d'une part, le moyen de convoyage amont (2) et, d'autre part, le moyen de convoyage aval (6), le moyen de convoyage amont (2) et le moyen de convoyage aval (6) entraînant ainsi les produits (3) dans une direction de convoyage (11), ledit moyen de convoyage aval (6) étant de l'autre côté de la surface d'accumulation (4) par rapport au moyen de convoyage amont (2), **caractérisé en ce que**
le moyen de chargement (5) et le moyen de déchargement (7) déplacent les produits (3) transversalement par rapport à ladite direction de convoyage(11) ;
le moyen de convoyage aval (6) comprend une pluralité de moyens de déplacement indépendants recevant les produits (3) dans des zones de réception successivement réparties depuis le bord de la surface d'accumulation (4) opposé à celui le long duquel s'étend le moyen de convoyage amont (2) ;
et **en ce que**
ledit dispositif comprend, pour au moins une paire de zones de réception successives, une surface de transfert (9) montée entre elles, le moyen de déchargement (7) étant apte à larguer des produits (3) sur la au moins une surface de transfert (9).

2. Dispositif de convoyage (1) selon la revendication 1, où
au moins un moyen de déplacement indépendant prend la forme d'un chariot mobile autonome, qui, pour recevoir les produits (3) du moyen de déchargement (7), vient se placer temporairement dans l'une des zones de réception, et se déplace pour les dégager.

3. Dispositif de convoyage (1) selon l'une quelconque des revendications 1 ou 2, où
au moins un moyen de déplacement indépendant prend la forme d'un convoyeur de sortie (8) linéaire indépendant, s'étendant depuis l'une des zones de réception.

4. Dispositif de convoyage (1) selon la revendication 3, où
le au moins un convoyeur de sortie (8) peut circuler, selon le cas, dans l'un ou l'autre sens.

5. Dispositif de convoyage (1) selon l'une quelconque des revendications 1 à 4, **caractérisé en ce que**
le moyen de déchargement (7) est apte à déposer des produits (3) dans au moins deux zones de réception différentes.

6. Dispositif de convoyage (1) selon l'une quelconque des revendications 1 à 5, où
le moyen de déchargement (7) comprend un outil (10) unique, qui peut dégager des produits (3) dans chacune des zones de réception.

7. Dispositif de convoyage (1) selon l'une quelconque des revendications 1 à 5, où
le moyen de déchargement (7) comprend au moins deux outils (10) distincts, qui traitent successivement les produits (3).

8. Dispositif de convoyage (1) selon la revendication 7 où
au moins une surface de transfert (9) forme une zone tampon où des produits (3) peuvent être stockés temporairement de façon intermédiaire entre la surface d'accumulation (4) et le moyen de déplacement indépendant qui doit les dégager.

9. Dispositif de convoyage (1) selon la revendication 8, où
la au moins une surface de transfert (9) est une surface d'entraînement motorisée et entraîne les produits (3) transversalement en direction du moyen de déplacement indépendant.

10. Procédé de convoyage de mise en œuvre du dispositif de convoyage (1) de produits (3) selon l'une quelconque des revendications précédentes, lesdits produits (3) circulant sur le moyen de convoyage amont (2) qui les entraîne en colonne unifilaire le long de ladite direction de convoyage (11), puis sur un moyen de convoyage aval (6) parallèle, comprenant des étapes consistant à
- charger la surface d'accumulation (4) en y poussant transversalement les produits (3) depuis le moyen de convoyage amont (2),
- décharger la surface d'accumulation (4) en déplaçant transversalement les produits (3) sur le moyen de convoyage aval (6),
- dégager les produits (3) grâce au mouvement du moyen de convoyage aval (6),
procédé **caractérisé en ce que**
le moyen de convoyage aval (6) comprend une pluralité de moyens de déplacement indépendants, les produits (3) étant déchargés en lot sur l'un ou l'autre de ces moyens de déplacement indépendants.

11. Procédé de convoyage selon la revendication 10, où
le dégagement de produits (3) depuis la surface d'accumulation (4) jusque sur le moyen de déplacement indépendant se compose de plusieurs cycles successifs de déplacement transversal, chacun exécuté par un outil (10) différent.

12. Procédé de convoyage selon la revendication 11, **caractérisé en ce que**
il comprend, entre deux cycles de déplacement, au moins une étape supplémentaire d'accumulation de produits (3) après leur prise sur la surface d'accumulation (4) et avant leur dépose sur un moyen de déplacement indépendant.

## Patentansprüche

1. Fördervorrichtung (1), umfassend ein stromaufwärtiges Fördermittel (2) zum Aufnehmen von Produkten (3) von einer stromaufwärtigen Station, eine Sammelfläche (4), entlang derer das stromaufwärtige Fördermittel (2) verläuft, wobei sich bei der Fördervorrichtung (1) das stromaufwärtige Fördermittel (2) gegen die Sammelfläche (4) erstreckt und die Form mindestens eines Endlosförderbands aufweist, auf dessen Oberfläche die Produkte (3) abgelegt werden, ein Lademittel (5) zum Bewegen der Produkte (3) vom stromaufwärtigen Fördermittel (2) bis zur Sammelfläche, ein stromabwärtiges Fördermittel (6) zum Abtransportieren der Produkte (3) und ein Entlademittel (7) zum Bewegen der Produkte (3) von der Sammelfläche (4) zum stromabwärtigen Fördermittel (6), wobei sich die Sammelfläche (4) zwischen dem stromaufwärtigen Fördermittel (2) einerseits und dem stromabwärtigen Fördermittel (6) andererseits befindet, wobei das stromaufwärtige Fördermittel (2) und das stromabwärtige Fördermittel (6) die Produkte (3) so in einer Förderrichtung (11) bewegen, wobei sich das stromabwärtige Fördermittel (6) in Bezug auf das stromaufwärtige Fördermittel (2) auf der anderen Seite der Sammelfläche (4) befindet,
**dadurch gekennzeichnet, dass**
das Lademittel (5) und das Entlademittel (7) die Produkte (3) quer zur Förderrichtung (11) bewegen;
wobei das stromabwärtige Fördermittel (6) mehrere unabhängige Transportmittel umfasst, die die Produkte (3) in Aufnahmebereichen aufnehmen, die vom Rand der Sammelfläche (4) aus, der demjenigen gegenüberliegt, entlang dem sich das stromaufwärtige Fördermittel (2) erstreckt, aufeinanderfolgend verteilt sind;
und dass die Vorrichtung für mindestens ein Paar aufeinanderfolgender Aufnahmebereiche eine dazwischen montierte Übertragungsfläche (9) umfasst, wobei das Entlademittel (7) dazu geeignet ist, die Produkte (3) auf die mindestens eine Übertragungsfläche (9) abzuwerfen.

2. Fördervorrichtung (1) nach Anspruch 1, wobei
mindestens ein unabhängiges Transportmittel die Form eines autonomen mobilen Wagens aufweist, der sich zum Aufnehmen der Produkte (3) vom Entlademittel (7) vorübergehend in einen der Aufnahmebereiche begibt und sich bewegt, um sie abzutransportieren.

3. Fördervorrichtung (1) nach einem der Ansprüche 1 oder 2, wobei
mindestens ein unabhängiges Transportmittel die Form eines unabhängigen linearen Ausgabeförderers (8) aufweist, der sich von einem der Aufnahmebereiche aus erstreckt.

4. Fördervorrichtung (1) nach Anspruch 3, wobei
der mindestens eine Ausgabeförderer (8) je nach Fall in der einen oder der anderen Richtung laufen kann.

5. Fördervorrichtung (1) nach einem der Ansprüche 1 bis 4, **dadurch gekennzeichnet, dass**
das Entlademittel (7) dazu geeignet ist, Produkte (3) in mindestens zwei verschiedenen Aufnahmebereichen abzulegen.

6. Fördervorrichtung (1) nach einem der Ansprüche 1 bis 5, wobei
das Entlademittel (7) ein einzelnes Werkzeug (10) umfasst, das Produkte (3) in jedem der Aufnahmebereiche abtransportieren kann.

7. Fördervorrichtung (1) nach einem der Ansprüche 1 bis 5, wobei
das Entlademittel (7) mindestens zwei separate Werkzeuge (10) umfasst, die die Produkte (3) nacheinander bearbeiten.

8. Fördervorrichtung (1) nach Anspruch 7, wobei
mindestens eine Übertragungsfläche (9) einen Pufferbereich bildet, in dem die Produkte (3) zwischen der Sammelfläche (4) und dem unabhängigen Transportmittel, das sie abtransportieren soll, vorübergehend zwischengelagert werden können.

9. Fördervorrichtung (1) nach Anspruch 8, wobei
es sich bei der mindestens einen Übertragungsfläche (9) um eine motorisierte Antriebsfläche handelt, die die Produkte (3) quer in Richtung des unabhängigen Transportmittels antreibt.

10. Förderverfahren für den Einsatz der Vorrichtung (1) zum Fördern von Produkten (3) nach einem der vorangehenden Ansprüche, wobei die Produkte (3) auf dem stromaufwärtigen Fördermittel (2), das sie in einer gleichförmigen Kolonne entlang der Förderrichtung (11) bewegt, und dann auf einem parallelen stromabwärtigen Fördermittel (6) zirkulieren, umfassend die folgenden Schritte:
- Beladen der Sammelfläche (4), indem die Produkte (3) vom stromaufwärtigen Fördermittel (2) quer darauf geschoben werden,
- Entladen der Sammelfläche (4), indem die Produkte (3) quer auf das stromabwärtige Fördermittel (6) bewegt werden,
- Abtransportieren der Produkte (3) durch die Bewegung des stromabwärtigen Fördermittels (6),
wobei das Verfahren **dadurch gekennzeichnet ist, dass**
das stromabwärtige Fördermittel (6) eine Vielzahl unabhängiger Transportmittel umfasst, wobei die Produkte (3) in Chargen auf das eine oder das andere dieser unabhängigen Transportmittel entladen werden.

11. Förderverfahren nach Anspruch 10, wobei
sich der Abtransport der Produkte (3) von der Sammelfläche (4) auf das unabhängige Transportmittel aus mehreren aufeinanderfolgenden Querbewegungszyklen zusammensetzt, die jeweils durch ein anderes Werkzeug (10) ausgeführt werden.

12. Förderverfahren nach Anspruch 11, **dadurch gekennzeichnet, dass**
es zwischen zwei Bewegungszyklen mindestens einen zusätzlichen Schritt des Sammelns von Produkten (3) nach ihrer Aufnahme von der Sammelfläche (4) und vor ihrer Ablage auf dem unabhängigen Transportmittel umfasst.

## Claims

1. Conveying device (1) comprising an upstream conveying means (2) for receiving products (3) from at least one upstream station, an accumulation surface (4) along which the upstream conveying means (2) circulates, in which conveying device (1) said upstream conveying means (2) extends against said accumulation surface (4) and takes the form of at least one endless belt conveyor, on the surface of which the products (3) are placed, a loading means (5) for moving the products (3) from said upstream conveying means (2) onto the accumulation surface, a downstream conveying means (6) for removing the products (3), and an unloading means (7) for moving the products (3) from the accumulation surface (4) onto the downstream conveying means (6), the accumulation surface (4) being located between, on the one hand, the upstream conveying means (2) and, on the other hand, the downstream conveying means (6), the upstream conveying means (2) and the downstream conveying means (6) thus driving the products (3) in a conveying direction (11), said downstream conveying means (6) being on the other side of the accumulation surface (4) with respect to the upstream conveying means (2), **characterized in that**
the loading means (5) and the unloading means (7) move the products (3) transversely with respect to said conveying direction (11);
the downstream conveying means (6) comprises a plurality of independent movement means that receive the products (3) in receiving zones successively distributed from the edge of the accumulation surface (4) that is opposite the edge along which the upstream conveying means (2) extends;
and **in that**
said device comprises, for at least one pair of successive receiving zones, a transfer surface (9) that is mounted between them, the unloading means (7) being able to dump products (3) onto the at least one transfer surface (9).

2. Conveying device (1) according to Claim 1, wherein
at least one independent movement means takes the form of an autonomous movable carriage which, in order to receive the products (3) from the unloading means (7), places itself temporarily in one of the receiving zones and moves in order to remove them.

3. Conveying device (1) according to either one of Claims 1 and 2, wherein
at least one independent movement means takes the form of an independent linear output conveyor (8) extending from one of the receiving zones.

4. Conveying device (1) according to Claim 3, wherein
the at least one output conveyor (8) can circulate, depending on the case, in one direction or the other.

5. Conveying device (1) according to any one of Claims 1 to 4, **characterized in that**
the unloading means (7) is able to deposit products (3) in at least two different receiving zones.

6. Conveying device (1) according to any one of Claims 1 to 5, wherein
the unloading means (7) comprises a single tool (10) that can remove products (3) into each of the receiving zones.

7. Conveying device (1) according to any one of Claims 1 to 5, wherein
the unloading means (7) comprises at least two separate tools (10) that successively handle the products (3) .

8. Conveying device (1) according to Claim 7, wherein
at least one transfer surface (9) forms a buffer zone where products (3) can be intermediately stored temporarily between the accumulation surface (4) and the independent movement means that is to remove them.

9. Conveying device (1) according to Claim 8, wherein
the at least one transfer surface (9) is a motorized drive surface and drives the products (3) transversely in the direction of the independent movement means.

10. Conveying method employing the device (1) for conveying products (3) according to any one of the preceding claims, said products (3) circulating on the upstream conveying means (2), which drives them in a single-file column along said conveying direction (11), and then on a parallel downstream conveying means (6), comprising steps consisting in:
- loading the accumulation surface (4) by pushing the products (3) from the upstream conveying means (2) onto it transversely,
- unloading the accumulation surface (4) by moving the products (3) onto the downstream conveying means (6) transversely,
- removing the products (3) by virtue of the movement of the downstream conveying means (6),
which method is **characterized in that**
the downstream conveying means (6) comprises a plurality of independent movement means, the products (3) being unloaded as a batch onto one or another of these independent movement means.

11. Conveying method according to Claim 10, wherein
the removal of products (3) from the accumulation surface (4) onto the independent movement means is composed of a plurality of successive transverse movement cycles, each performed by a different tool (10).

12. Conveying method according to Claim 11, **characterized in that**
it comprises, between two movement cycles, at least one additional step of accumulating products (3) after they have been taken from the accumulation surface (4) and before they are deposited onto an independent movement means.
